# EUROPEAN PATENT APPLICATION

(11) **EP 4 759 840 A1**
(43) Date of publication of application: **17.06.2026**
(21) Application number: 24852059.5
(22) Date of filing: 27.06.2024
(51) Int. Cl.: C08F 210/16, C08F 4/659, C08F 4/6592, C08J 5/18, B65D 65/40

(54) **HIGH-DENSITY ETHYLENE-BASED POLYMER USING HYBRID SUPPORTED CATALYST, AND PREPARATION METHOD THEREOF**

(30) Priority: 07.08.2023 KR 20230103175
(71) Applicant: Hanwha Solutions Corporation, Jung-gu Seoul 04541 (KR)
(72) Inventor: PARK, Hye Ran, Daejeon 34128 (KR); KIM, Sung Dong, Daejeon 34128 (KR); JOUNG, Ui Gap, Daejeon 34128 (KR); SEO, Junho, Daejeon 34128 (KR); LEE, Munhee, Daejeon 34128 (KR); KIM, Ji Ho, Daejeon 34128 (KR); LIM, Jae Yun, Daejeon 34128 (KR); JOO, Sung Hwan, Daejeon 34128 (KR)
(74) Representative: Berggren Oy
(86) International application number: PCT/KR2024/009012
(87) International publication number: WO 2025/033703

(57) **Abstract**

The present disclosure relates to a high-density ethylene-based polymer exhibiting high processability by using a hybrid catalyst composition, and to a method of preparing the same, and provides a high-density polyethylene-based polymer having excellent optical properties, excellent mechanical properties such as impact resistance and hardness, and excellent stretchability. The high-density ethylene-based polymer of the present disclosure provides a polyethylene-based polymer capable of biaxial stretching or simultaneous stretching.

## Description

### Technical Field

The present disclosure relates to a high-density ethylene-based polymer exhibiting high processability by using a hybrid catalyst composition, and to a method of preparing the same.

### Background Art

Polyethylene is a polymer used in various containers such as shopping bags, vinyl houses, fishing nets, cigarette wrappers, ramen bags, battery cases, car bumpers, and interior materials, packaging films, fibers, pipes, packing, and paints. The mechanical and thermal properties of polyethylene are affected by molecular weight and density, and thus fields of application thereof are varied. In general, the lower the density of a polyethylene polymer, the better the transparency and impact strength thereof, but physical properties such as heat resistance, hardness, and flexural modulus deteriorate, and chemical resistance also deteriorates. On the other hand, the higher the density of a polyethylene polymer, the better the physical properties such as heat resistance, hardness, and flexural modulus, and the higher the chemical resistance, but the lower the transparency and impact strength.

Meanwhile, low-density polyethylene has excellent stretching properties and is thus mainly used as a packaging material, but its mechanical properties, such as flexural modulus, are low, and therefore cannot be used as a packaging material alone. In addition, high-density polyethylene, which satisfies these mechanical properties, has a problem of not being able to be manufactured into a packaging film because it does not have stretchability. Thus, as packaging materials using polyethylene, multilayered packaging materials obtained by laminating a low-density polyethylene film with PET (Polyethylene terephthalate) or PA (Polyamide) are currently mainly used. Since these multilayered packaging materials are not made of a single material and are used as laminates containing PET or PA, it is difficult for these packaging materials to be recycled, thus causing serious environmental pollution.

Accordingly, there is a need to develop technologies for providing new high-density polyethylene capable of being processed into a single-component packaging material and being used therein. In addition, despite the use of high-density polyethylene, a polyethylene resin having excellent stretchability while satisfying sufficient mechanical properties is required. That is, research is required on the preparation of high-density polyethylene capable of being processed into a food packaging material and being used therein as a new single material with sufficient ductility and excellent impact strength and chemical resistance.

There is a need for the development of high-density polyethylene and a method of preparing the same that solves the above problems. That is, in order to prepare high-density polyethylene used in the production of a single packaging material, research is needed on high-density polyethylene that satisfies both excellent mechanical properties, excellent chemical resistance, high stretchability, and excellent molding processability, by using a metallocene catalyst, and a method of preparing the same.

### Disclosure of Invention

### Technical Problem

The present disclosure provides high-density polyethylene that can be used in a packaging film having excellent optical properties and excellent mechanical properties such as impact resistance and hardness as well as time excellent stretchability as a single polyethylene resin.

### Solution to Problem

The present disclosure provides a method of preparing high-density polyethylene, the method including: polymerizing ethylene and C₄-C₂₀ α-olefin under a hybrid metallocene catalyst including transition metal compounds of Formulas 1 to 3 below, wherein the hybrid metallocene catalyst includes the transition metal compounds at a molar ratio of Formula 1: Formula 2: Formula 3 = 1: 0.2 to 3: 1 to 7:

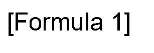

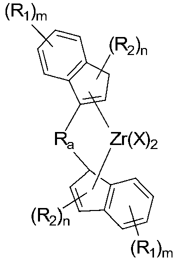

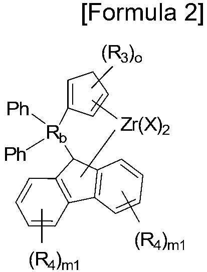

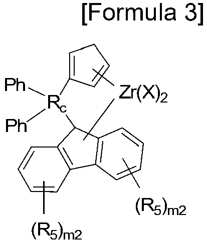

(in Formulas 1 to 3, Rₐ is C₂-C₆ alkylene, R_{b} and R_{c} are each independently C₁-C₆ alkylene, R₁, R₂, R₃, R₄ and R₅ are each independently C₁-C₅ alkyl, X is a halogen, m, m1 and m2 are integers of 0 to 4, n is an integer of 0 to 3, and o is an integer of 1 to 4.)

In an aspect of the present disclosure, the C₄-C₂₀ α-olefin may be a C₅-C₈ α-olefin, and specifically, may be 1-hexene.

In an aspect of the present disclosure, the hybrid metallocene catalyst may be a supported catalyst in which a transition metal compound and a cocatalyst are supported on a carrier.

In an aspect of the present disclosure, the cocatalyst is at least one selected from the group consisting of compounds represented by Formulas 7 to 9 below:

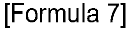

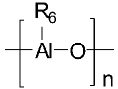

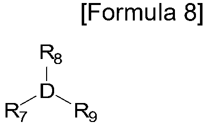

[Formula 9] [L-H]⁺[Z(A)4]⁻ or [L]⁺[Z(A)4]⁻

(in Formulas 7 to 9, n is an integer greater than or equal to 2, R₆ is a halogen, a C₁-C₂₀ alkyl group, or a C₁-C₂₀ alkyl group substituted with a halogen, D is aluminum (Al) or boron (B), R₇, R₈ and R₉ are each independently a halogen, a C₁-C₂₀ straight or branched alkyl group, a C₁-C₂₀ alkyl group substituted with a halogen, or a C₁-C₂₀ alkoxy group, L is a neutral or cationic Lewis base, [L-H]⁺ and [L]⁺ are Brønsted acids, Z is a Group 13 element, and A is a C₆-C₂₀ aryl group or a C₁-C₂₀ alkyl group.)

In an aspect of the present disclosure, the carrier may be at least one selected from the group consisting of silica, aluminum oxide, and magnesium oxide.

The present disclosure provides a high-density polyethylene resin prepared by polymerizing ethylene and C₄-C₂₀ α-olefin in the presence of a hybrid catalyst, wherein the high-density polyethylene resin has a density of 0.94 g/cm3 or more, a PDI of 25 or more, and is capable of being stretched 4 times or more in a machine direction (MD) at a speed of 200 %/s at 120 to 130°C and then sequentially biaxially stretched 4 times or more in a transverse direction (TD), or of being simultaneously biaxially stretched 4x4 times or more in the machine direction (MD) and transverse direction (TD).

In an aspect of the present disclosure, the Formula 1 may be a transition metal compound represented by Formula 4 below:

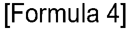

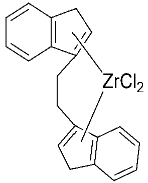

In an aspect of the present disclosure, the Formula 2 may be a transition metal compound represented by Formula 5 below:

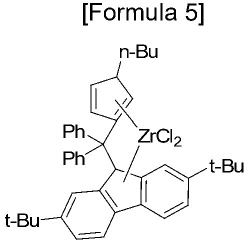

In an aspect of the present disclosure, the Formula 3 may be a transition metal compound represented by Formula 6 below:

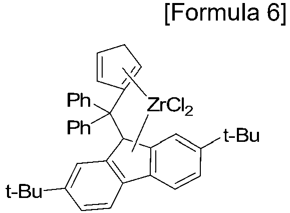

In an aspect of the present disclosure, the high-density polyethylene resin may have an MFR (Melt Flow Rate) of 40 or more.

In an aspect of the present disclosure, the high-density polyethylene resin may have a crystallinity (Xc) of 80% or less.

The present disclosure provides a high-density polyethylene film comprising the above high-density polyethylene resin.

In an aspect of the present disclosure, the high-density polyethylene film may have a haze of 25% or less as measured according to ASTM D1003.

In an aspect of the present disclosure, the high-density polyethylene film may have a transparency of 70% or more as measured according to ASTM D1003.

In an aspect of the present disclosure, the high-density polyethylene film may have an impact strength of 120 gf or more as measured according to ASTM D1709.

### Advantageous Effects of Invention

The present disclosure can provide a high-density polyethylene-based polymer capable of sequential biaxial stretching or simultaneous biaxial stretching at a high magnification using the hybrid metallocene catalyst, and a preparation method thereof.

The present disclosure can provide a high-density polyethylene-based polymer having excellent optical properties, excellent mechanical properties such as impact resistance and hardness, and excellent processability, and a preparation method thereof.

The present disclosure can provide a high-density polyethylene-based polymer capable of biaxial stretching or simultaneous biaxial stretching at a high magnification, for example, capable of simultaneous and sequential stretching at least 4 times in MD and TD directions using the hybrid metallocene catalyst, and a preparation method thereof.

### Best Mode for Carrying out the Invention

Unless defined in the present specification, all technical and scientific terms used herein have the same meaning as that commonly understood by one of those skilled in the art to which the present disclosure belongs. The terms used in the description herein are for the purpose of describing particular embodiments only and are not intended to restrict the present disclosure.

The singular forms used in the specification are intended to include the plural forms as well, unless the context clearly dictates otherwise.

The expressions "include," "comprises," "contains," "has," and "characterizes" mentioned in this specification are open-ended descriptions having equivalent meanings and do not exclude additional elements, materials, or processes not listed.

The unit of % used in this specification without special mention means weight % unless otherwise defined.

Hereinafter, the present disclosure will be described in detail. However, this is merely exemplary, and the present disclosure is not limited to the specific embodiments described by way of example.

Polyethylene polymers are used in packaging materials in various industries. When they are used in packaging materials, low-density polyethylene having excellent processability and stretchability is used in other resin films. However, low-density polyethylene has poor mechanical properties, so it is used as a laminate with resin films such as polyethylene terephthalate (PET) or polyamide (PA). In this case, it is used as a laminate of different materials, it cannot be recycled, thereby causing many environmental problems and limiting its use.

To solve these problems, there have been attempts to apply high-density polyethylene having excellent mechanical properties to packaging materials. However, in this case, mechanical strength and chemical resistance increases, but transparency and stretching properties become poor, and thus film stretchability is insufficient, so there are still problems in using it as a single packaging material.

To overcome this, various high-density polyethylene polymers using a metallocene catalyst have been developed, but it has not been possible to prepare high-density polyethylene having sufficient heat resistance, hardness, flexural modulus, and chemical resistance while satisfying transparency and biaxial stretching characteristics.

To solve the above problems, there is provided high-density polyethylene capable of being prepared into a packaging material having mechanical strength and stretchability, for example, capable of sequential biaxial stretching and simultaneous biaxial stretching at high magnification, using a specific hybrid metallocene catalyst, and a method thereof, thereby completing the present disclosure.

The present disclosure provides a method of preparing high-density polyethylene for packaging materials having a density of 0.94 g/cm³ or more and excellent extensibility and mechanical properties by polymerizing ethylene and C₄-C₂₀ α-olefin in the presence of a hybrid metallocene catalyst including compounds represented by Formulas 1 to 3 below:

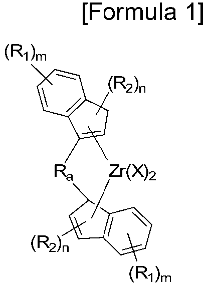

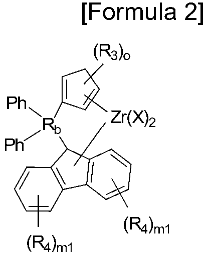

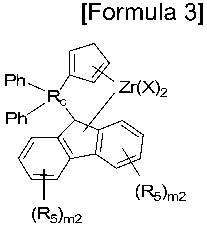

(in the Formulas 1 to 3, Rₐ is C₂-C₆ alkylene, R_{b} and R_{c} are each independently C₁-C₆ alkylene, R₁, R₂, R₃, R₄ and R₅ are each independently C₁-C₅ alkyl, X is a halogen, m, m1 and m2 are integers of 0 to 4, n is an integer of 0 to 3, and o is an integer of 1 to 4.)

For example, the hybrid metallocene catalyst may include the compounds chemical formula 1: chemical formula 2: chemical formula 3 at a molar ratio of Formula 1: Formula 2: Formula 3 = 1: 0.2 to 3: 1 to 7, and preferably 1: 0.2 to 1.5: 1 to 6, but the molar ration thereof is not limited thereto. When the compounds are included in the above-described range, physical properties advantageous in application to polyethylene packaging materials can be exhibited.

For example, in the ratio of Formulas 1 to 3, the molar ratio of Formula 2 to Formula 1 may be 1:0.2 to 3, and the molar ratio of Formula 3 to Formula 1 may be 1:1 to 7.

In the method of preparing high-density polyethylene according to the present disclosure, high-density polyethylene that is transparent and has high processability while exhibiting high mechanical properties such as sufficient heat resistance, impact strength, and hardness can be prepared, and thus there is an effect of providing a method for preparing high-density polyethylene applicable to packaging materials.

Specifically, in the case of polyethylene prepared using a conventional metallocene catalyst, there was a problem that when mechanical properties such as heat resistance, impact strength, and hardness were satisfied, biaxial stretching characteristics were poor, and when high processability was satisfied due to high stretching characteristics, mechanical properties were poor.

However, the high-density polyethylene prepared from ethylene and C₄-C₂₀ α-olefin using the hybrid metallocene having the above composition ratio according to the present disclosure satisfy both mechanical properties and biaxial stretching characteristics.

In addition, the hybrid metallocene catalyst according to the present disclosure has excellent activity to enable a stable operation in the preparation of high-density polyethylene, thus having a process advantage in that high-density polyethylene can be continuously prepared.

As an example, in the hybrid metallocene catalyst, the transition metal compound of Formula 1 may be a transition metal compound of Formula 4 below:

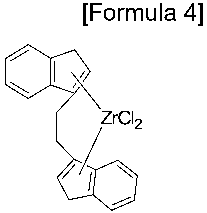

The transition metal compound of the Formula 4 exhibits very high catalytic activity, and the polyethylene prepared is characterized in being able to exhibit high biaxial stretching properties.

As an example, in the hybrid metallocene catalyst, the transition metal compound of Formula 2 may be a transition metal compound of Formula 5 below:

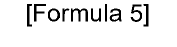

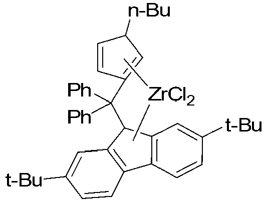

The transition metal compound of the Formula 5 can exhibit high comonomer incorporation during the preparation of a polymer.

As an example, in the hybrid metallocene catalyst, the transition metal compound of Formula 3 may be a transition metal compound of Formula 6 below:

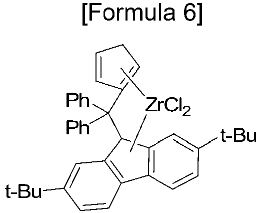

The transition metal compound of the Formula 6 can exhibit high comonomer incorporation, can form a high-molecular-weight polymer during the preparation of a polymer, and can improve high mechanical properties such as impact strength and flexural strength.

In an embodiment, when the hybrid metallocene catalyst of the present disclosure includes the transition metal compounds of the Formulas 4 to 6, the polyethylene polymer prepared from the metallocene catalyst exhibits mechanical strength and biaxial stretching properties that are more advantageous for use in a substrate layer included in a multilayered packaging material, and thus is more preferred.

In an example, the hybrid metallocene catalyst may be a supported catalyst in which a transition metal compound and a cocatalyst are supported on a carrier.

The cocatalyst may include compounds of Formulas 7 to 9 below:

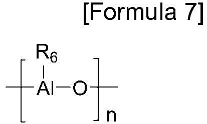

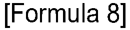

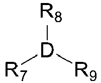

[Formula 9] [L-H]⁺[Z(A)4]- or [L]⁺[Z(A)4]-

(in the Formulas 7 to 9, n is an integer greater than or equal to 2, R₆ is a halogen, a C₁-C₂₀ alkyl group, or a C₁-C₂₀ alkyl group substituted with a halogen, D is aluminum (Al) or boron (B), R₇, R₈ and R₉ are each independently a halogen, a C₁-C₂₀ straight or branched alkyl group, a C₁-C₂₀ alkyl group substituted with a halogen, or a C₁-C₂₀ alkoxy group, L is a neutral or cationic Lewis base, [L-H]⁺ and [L]⁺ are Brønsted acids, Z is a Group 13 element, and A is a C₆-C₂₀ aryl group or a C₁-C₂₀ alkyl group.)

The compound represented by the Formula 7 may be at least one selected from the group consisting of methylaluminoxane, ethylaluminoxane, isobutylaluminoxane, and butylaluminoxane, but is not limited thereto.

The compound represented by the Formula 8 may be, for example, at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide, dimethylaluminum ethoxide, trimethylboron, triethylboron, triisobutylboron, tripropylboron, and tributylboron, but is not limited thereto.

The compound represented by the Formula 9 may be, for example, at least one selected from the group consisting of triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenyl boron, trimethylphosphonium tetraphenylboron, triethylammonium tetraphenylaluminum, tributylammonium tetraphenylaluminum, Trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, and triphenylcarbonium tetrapentafluorophenylboronm, but is not limited thereto.

The carrier may be at least one selected from the group consisting of silica, aluminum oxide, and magnesium oxide, but is not limited thereto.

The hybrid metallocene catalyst may include 0.001 to 10 mmol or 0.001 to 1 mmol of the three kinds of transition metal compounds of the Formulas 1 to 3 based on 1 g of the carrier, and may include 1 to 20 mmol or 2 to 15 mmol of a cocatalyst based on 1 g of the carrier, but the present disclosure is not necessarily limited thereto.

In an example, the average particle size of the carrier may be, but is not limited thereto, 10 to 250 µm, 10 to 150 µm, or 20 to 100 µm.

The micropore volume of the carrier may be, but is not limited to, 0.1 to 10 ml/g, 0.5 to 5 ml/g, or 1.0 to 3.0 ml/g.

In an example, the hybrid metallocene catalyst may be injected into a reactor at a rate of 0.1 g/h or more, 0.5 g/h or more, 10 g/h or less, or 5 g/h or less, for example, 0.1 to 10 g/h or 0.5 to 5 g/h, but the present disclosure is not limited thereto.

In an example, the high-density polyethylene may be prepared by injecting hydrogen into a reactor together with a monomer. In an example, the hydrogen may be injected into a reactor at a rate of 0.1 g/h or more, 1 g/h or more, 5 g/h or less, 100 g/h or less, or 50 g/h or less, for example, 0.1 to 100 g/h or 1 to 50 g/h, but the present disclosure is not limited thereto.

In an example, the C₄-C₂₀ α-olefin may be a C₄-C₁₂ α-olefin, and specifically, the C₄-C₂₀ α-olefin may be at least one selected from the group consisting of 1-butene, 1-pentene, 3-methyl-1-butene, 1-hexene, 4-methyl-1-pentene, 3-methyl-1-pentene, 1-hexene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene, and 3,4-dimethyl-1-hexene. As a specific example, the C₄-C₂₀ α-olefin may be 1-hexene, but is not necessarily limited thereto.

In one example, the C₄-C₂₀ α-olefin may be injected into a reactor at a rate of 50 g/h or more, 100 g/h or more, 150 g/h or more, 1500 g/h or less, or 1000 g/h or less, for example, 50 to 1500 g/h or 100 to 1000 g/h, but is not limited thereto.

In an example, the molar ratio of hydrogen/ethylene may be 0.01 or more, 0.1 or more, 10 or less, or 5 or less, for example, 0.01 to 10, 0.1 to 5, but is not limited thereto.

In an example, the molar ratio of hexene/ethylene may be 0.01 or more, 0.1 or more, 10 or less, or 5 or less, for example, 0.01 to 10, 0.1 to 5, or a value therebetween, but is not limited thereto.

In an example, the polymerization of ethylene and a C₄-C₂₀ α-olefin may be carried out at a temperature of 50 to 200°C, 60 to 100°C, or 60 to 90°C and a pressure of 1 to 50 bar, 1 to 30 bar, or any of the above values and any value therebetween, but is not limited thereto, and it is should be understood that the polymerization temperature and pressure may be appropriately changed depending on reactants and reaction conditions.

In an example, the polymerization of ethylene and C₄-C₂₀ α-olefin may be a slurry phase or gas phase polymerization reaction, and when the polymerization is performed in a liquid phase or slurry phase, a solvent may be further included. Specifically, examples of the solvent may include propane, butane, pentane, hexane, octane, decane, dodecane, cyclopentane, methylcyclopentane, cyclohexane, methylcyclohexane, benzene, toluene, xylene, dichloromethane, chloroethane, dichloroethane, and hlorobenzene, and these solvents may be mixed and used in a certain ratio, but the present disclosure is not limited thereto.

The present disclosure provides a high-density polyethylene resin prepared by polymerizing ethylene and C₄-C₂₀ α-olefin in the presence of a hybrid catalyst, wherein the high-density polyethylene resin has a density of 0.94 g/cm³ or more, a PDI of 25 or more, and is capable of being stretched 4 times or more in a machine direction (MD) at a speed of 200 %/s at 120 to 130°C and then sequentially biaxially stretched 4 times or more in a transverse direction (TD), or of being simultaneously biaxially stretched 4x4 times or more in the machine direction (MD) and transverse direction (TD). In addition, the high-density polyethylene according to the present disclosure may provide a high-density polyethylene resin capable of simultaneous biaxial stretching of four times or more in the MD x TD under the above-described conditions, not only in the above-described sequential stretching, but also in the above-described simultaneous biaxial stretching.

In an embodiment, the density of the high-density polyethylene resin may be 0.94 g/cm³ or more, 0.96 g/cm3 or more, 0.99 g/cm³ or less, 0.97 g/cm3 or less, or 0.96 g/cm³ or less, for example, 0.94 to 0.99 g/cm³, 0.94 to 0.96 g/cm³, or any of the above values and any value therebetween.

The PDI thereof may be 30 or more, 40 or more, 50 or more, 60 or more, 70 or less, 60 or less, 50 or less, 55 or less, 50 or less, 40 or less, for example, 30 to 70, 30 to 60, or any of the above values and any value therebetween.

For example, the high-density polyethylene resin may have a weight average molecular weight of 50,000 to 20,000 g/mol, 70,000 to g/mol, or 90,000 to 15,000 g/mol, and a number average molecular weight of 2,000 to 10,000 g/mol, 3,000 to 7,000 g/mol, or 3,000 to 5,000 g/mol.

As another example, the high-density polyethylene resin may have a Z-weight average molecular weight of 200,000 to 500,000 g/mol, 250,000 to 500,000 g/mol, or 300,000 to 500,000 g/mol.

The high-density polyethylene resin according to the present disclosure may be stretched 4 times or more, 5 times or more, 7 times or more, or 20 times, for example, 4 to 20 times, 5 to 15 times, or any of the above values and values therebetween in the machine direction (MD).

In addition, the high-density polyethylene resin may be stretched in the machine direction (MD), and then stretched in the transverse direction (TD) 4 times or more, 7 times or more, 9 times or more, or 20 times or less, for example, by 4 to 20 times, 7 to 15 times, or any of the above values and values therebetween.

In an example, as described above, the high-density polyethylene of the present disclosure is capable of not only sequential biaxial stretching of stretching in the MD direction and then stretching in the TD direction, but also simultaneous biaxial stretching. Specifically, the high-density polyethylene resin of the present disclosure may be simultaneously stretched in the machine direction (MD) and the transverse direction (TD) at a speed of 200 %/s at 120 to 130°C 4 times or more, 5 times or more, 9 times or more, 15 times or more, or 20 times or less, for example, 4 to 20 times, or any of the above values and any value therebetween. In particular, the fact that the high-density polyethylene resin of the present disclosure can be stretched within the above-described range can be considered to be a remarkable feature that distinguishes it from conventional high-density polyethylene resins.

Specifically, conventional high-density polyolefin resins prepared using metallocene catalysts caused breakage or tearing during biaxial stretching. However, the high-density polyethylene resin according to the present disclosure is capable of sequential biaxial stretching and simultaneous biaxial stretching at the above-described magnification, and has processability that exhibits superior stretchability compared to conventional high-density polyethylene, so that it has an effect of being usable as a single polyethylene packaging material when applied to polyethylene-based packaging materials.

That is, the high-density polyethylene resin according to the present disclosure can solve the problem that conventional polyethylene-based packaging materials could not achieve high mechanical properties and stretching properties, thus making it impossible to manufacture packaging materials made of a single polyethylene component. Accordingly, the high-density polyethylene resin has excellent mechanical properties, and enables easy manufacturing of packaging materials using a single material, thereby replacing packaging materials having a laminated structure using low-density polyethylene that was not recyclable, including conventional resins.

Therefore, the high-density polyethylene resin according to the present disclosure has a remarkable effect in terms of economic and environmental protection in that it can be applied to polyethylene packaging materials to provide packaging materials that can be recycled.

In an embodiment, the high-density polyethylene resin according to the present disclosure may have a melt flow ratio (MFR) (MI (21.6 kg)/MI (2.16 kg)) of 40 or more, 50 or more, 60 or more, 70 or more, 100 or less, or 80 or less, for example, 60 to 100, 60 to 90, 60 to 80, or any of the above values and any value therebetween, as calculated by measuring the melting index (MI) at 190° C under a load of 21.6 kg and a load of 2.16 kg, respectively, according to ASTM D 1238.

In an embodiment, the high-density polyethylene resin according to the present disclosure may have a crystallinity (Xc) of 80% or less, 70% or more, 30% or more, 40% or more, or 50% or more, for example, 30 to 80%, 40 to 70%, or any of the above values and any value therebetween, as measured using a differential scanning calorimeter (DSC, device name: DSC 2920, manufacturer: TA instrument).

That is, since the high-density polyethylene resin according to the present disclosure satisfies the values of density, PDI, MFR and crystallinity (Xc) described above, it exhibits high optical properties and stretching properties, and thus has an effect of exhibiting properties capable of being used as a packaging material and a single resin product, despite being a high-density polyethylene.

Although this does not limit the interpretation, it can be interpreted that the high-density polyethylene has high hardness, chemical resistance, transparency, and biaxial stretching characteristics by having a high PDI value, low crystallinity, and high MFR while satisfying the above-described density range.

The present disclosure provides a high-density polyethylene film including the above-described high-density polyethylene resin.

The high-density polyethylene film of the present disclosure can be used in products requiring high mechanical properties and stretching properties in addition to high density, high PDI, low crystallinity, high MFR, and biaxial stretching properties as it includes the above-described high-density polyethylene resin, and in particular, can be applied to the above-described polyethylene packaging material to manufacture a polyethylene single packaging material.

The high-density polyethylene film of the present disclosure can be manufactured by extruding and stretching the above-described high-density polyethylene resin or by blow-molding this polyethylene resin, but the manufacturing method thereof is not limited as long as the high-density polyethylene resin can be formed into a film.

In an example, the high-density polyethylene film may have a haze of 25% or less, 24% or less, 23% or less, 20% or less, 15% or less, 1% or more, 5% or more, or 10% or more, for example, 1 to 25%, 5 to 25%, or any of the above values and any value therebetween, as measured according to ASTM D1003.

In an embodiment, the high-density polyethylene film may have a transparency of 50% or more, 60% or more, 70% or more, 99% or less, 90% or less, or 85% or less, for example, 50 to 99%, more specifically 60 to 99%, or any of the above values and any value therebetween, as measured according to ASTM D1003.

In addition, the high-density polyethylene film may have an impact strength of 100 gf or more, 110 gf or more, 120 gf or more, 150 gf or more, 200 gf or more, 250 gf or more, 300 gf or more, 350 gf or more, 390 gf or more, 400 gf or more, 430 gf or more, 600 gf or less, 500 gf or less, 450 gf or less, for example, 120 to 600 gf, 250 to 500 gf, or any of the above values and any value therebetween as measured according to ASTM D1709.

Since the high-density polyethylene film includes the above-described high-density polyethylene resin, a high-quality high-density polyethylene film having a uniform surface and high strength can be provided by utilizing high stretching characteristics. In addition, the high-density polyethylene film manufactured as above exhibits low haze, high transparency and high impact strength, so that it can be easily applied to polyethylene products, and thus has high commercialization value, and particularly, can be advantageously applied to the manufacturing of single polyethylene packaging materials.

Hereinafter, embodiments of the present disclosure will be further described with reference to specific experimental examples. The examples and comparative examples included in the experimental examples are only illustrative of the present disclosure and do not limit the scope of the appended claims. It is obvious to those skilled in the art that various changes and modifications to the examples are possible within the scope and technical idea of the present disclosure, and it is also natural that such changes and modifications fall within the scope of the appended claims.

### [Preparation Example 1]

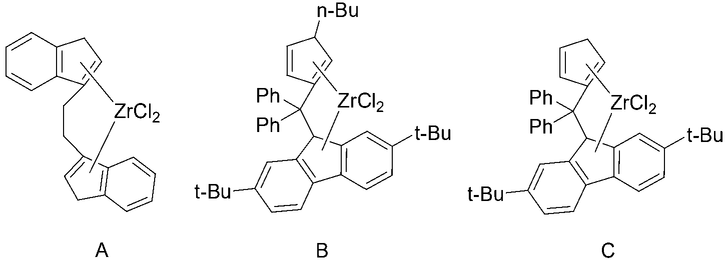

7.8 g of a composite transition metal compound including transition metal composition A (tetramethylcyclopentadienyl)(n-butylcyclopentadienyl) zirconium dichloride), transition metal compound B (diphenylmethylene-(3-butylcyclopentadienyl)(2,7-di-tert-butyl-9-fluorenyl)-zirconium(IV)-dichloride)) and transition metal compound C (diphenylmethylene-(cyclopentadienyl)(2,7-di-tert-butyl-9-fluorenyl)-zirconium(IV)-dichloride)) (the molar ratio of the transition metal compounds was 1:0.5:1.8) was mixed with 1.1 kg of a toluene solution containing 10 wt% of methylaluminum oxane (MAO) to prepare a mixed solution having a ratio of Al/Zr of 150, and stirred at room temperature for 1 hour to prepare a transition metal compound solution.

250 g of silica (XP2402) was put into a reactor, 30 ml of purified toluene was added thereto to prepare a silica slurry, and the transition metal compound solution was injected into the silica slurry and stirred in an oil bath at 75°C for 3 hours to prepare a metallocene catalyst solution. The metallocene catalyst solution was separated into solid and liquid, a supernatant was removed to separate only a metallocene catalyst, and the metallocene catalyst was washed three times with toluene and dried in vacuum at 60°C for 10 hours to recover 230 g of a powdered hybrid metallocene catalyst.

### [Preparation Example 2]

A powdered hybrid metallocene catalyst was prepared in the same manner as in Preparation Example 1, except that the transition metal compound A, the transition metal compound B, and the transition metal compound C were included in 3.5 g of the composite transition metal compound at a molar ratio of 1: 1.5: 6.

### [Preparation Example 3]

A powdered hybrid metallocene catalyst was prepared in the same manner as in Preparation Example 1, except that the transition metal compound A, the transition metal compound B, and the transition metal compound C were included in 12.3 g of the composite transition metal compound at a molar ratio of 1: 0.3:1.4.

### [Comparative Preparation Example 1]

A powdered hybrid metallocene catalyst was prepared in the same manner as in Preparation Example 1, except that the transition metal compound A, the transition metal compound B, and the transition metal compound C were included in 5.9 g of the composite transition metal compound at a molar ratio of 1: 0.05: 1.8.

### [Comparative Preparation Example 2]

A powdered hybrid metallocene catalyst was prepared in the same manner as in Preparation Example 1, except that the transition metal compound A, the transition metal compound B, and the transition metal compound C were included in 4 g of the composite transition metal compound at a molar ratio of 1: 0.5: 0.17.

### [Comparative Preparation Example 3]

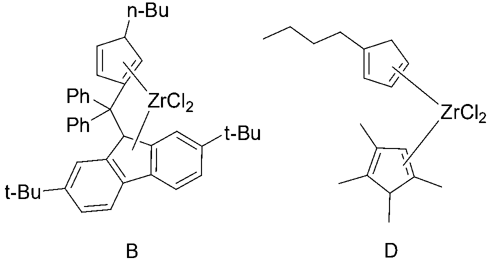

A powdered hybrid metallocene catalyst was prepared in the same manner as in Preparation Example 1, except that the composite transition metal compound was prepared using 1.8 g of transition metal compound D ((n-butylcyclopentadienyl)(tetramethylcyclopentadienyl)zirconium chloride) and 5.0 g of transition metal compound B (Diphenylmethylene-(3-butyl-cyclopentadienyl)(2,7-di-tert-butyl-9-fluorenyl)-zirconium(IV)-dichloride).

### [Comparative Preparation Example 4]

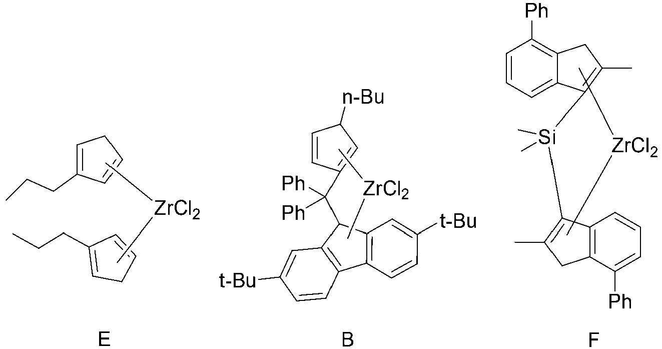

A powdered hybrid metallocene catalyst was prepared in the same manner as in Preparation Example 1, except that the composite transition metal compound was prepared using 1.2 g of transition metal compound E (bis(n-propylcyclopentadienyl)zirconium chloride), 0.8 g of transition metal compound B (Diphenylmethylene-(3-butyl-cyclopentadienyl)(2,7-di-tert-butyl-9-fluorenyl)-zirconium(IV)-dichloride)), and 5 g of transition metal compound F (dimethylsilylene)bis(2-methyl-4-phenylindenyl)zirconium dichloride.

### [Comparative Preparation Example 5]

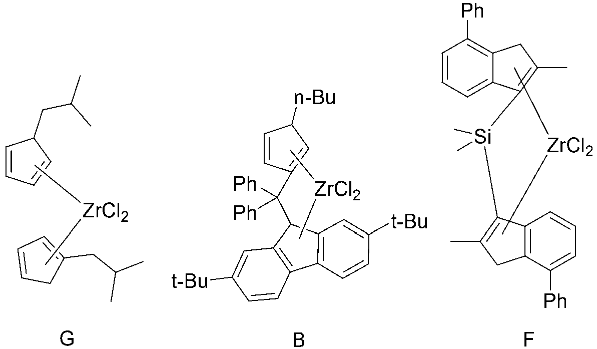

A powdered hybrid metallocene catalyst was prepared in the same manner as in Preparation Example 1, except that the composite transition metal compound was prepared using 1.8 g of transition metal compound G (bis(iso-butylcyclopentadienyl)zirconium chloride), 0.8 g of transition metal compound B (Diphenylmethylene-(3-butyl-cyclopentadienyl)(2,7-di-tert-butyl-9-fluorenyl)-zirconium(IV)-dichloride), and 3.8 g of transition metal compound F (dimethylsilylene)bis(2-methyl-4-phenylindenyl)zirconium dichloride.

### [Example 1]

An ethylene/1-hexene polymerization reaction was performed at 90°C by a continuous gas phase polymerization reactor including a fluidized bed by using the catalyst prepared in Preparation Example 1. Reaction conditions are described in Table 2 below.

### [Example 2]

An ethylene/1-hexene polymerization reaction was performed in the same manner as in Example 1, except that the catalyst prepared in Preparation Example 2 was used as a catalyst.

### [Example 3]

An ethylene/1-hexene polymerization reaction was performed in the same manner as in Example 1, except that the catalyst prepared in Preparation Example 3 was used as a catalyst.

### [Example 4]

An ethylene/1-hexene polymerization reaction was performed in the same manner as in Example 1, except that the polymerization temperature was set at 80°C.

### [Comparative Example 1]

An ethylene/1-hexene polymerization reaction was performed in the same manner as in Example 1, except that the catalyst prepared in Comparative Preparation Example 1 was used as a catalyst.

### [Comparative Example 2]

An ethylene/1-hexene polymerization reaction was performed in the same manner as in Example 1, except that the catalyst prepared in Comparative Preparation Example 2 was used as a catalyst.

### [Comparative Example 3]

An ethylene/1-hexene polymerization reaction was performed in the same manner as in Example 1, except that the catalyst prepared in Comparative Preparation Example 3 was used as a catalyst.

### [Comparative Example 4]

An ethylene/1-hexene polymerization reaction was performed in the same manner as in Example 1, except that the catalyst prepared in Comparative Preparation Example 4 was used as a catalyst.

### [Comparative Example 5]

An ethylene/1-hexene polymerization reaction was performed in the same manner as in Example 1, except that the catalyst prepared in Comparative Preparation Example 5 was used as a catalyst.

**[Table 1]**

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Polymerization temperature (°C) | 90 | 90 | 90 | 80 | 90 | 90 | 90 | 90 | 90 |
| Catalyst injection amount (g/hr) | 1.7 | 1.69 | 1.67 | 1.7 | 2.1 | 1.2 | 0.9 | 1.85 | 2.3 |
| Hydrogen injection amount (g/hr) | 18.00 | 31.69 | 23.44 | 18.00 | 15.12 | 17.00 | 18.00 | 10.86 | 5.96 |
| Hexene injection amount (g/hr) | 176 | 500 | 278 | 176 | 348 | 549 | 700 | 353 | 346 |
| Molar ratio of hydrogen/ethylene | 1.14 | 1.53 | 1.34 | 1.14 | 0.84 | 0.77 | 1.09 | 0.29 | 0.09 |
| Molar ratio of hexene/ethyl ene | 0.46 | 0.44 | 0.41 | 0.46 | 0.79 | 0.47 | 1.01 | 0.93 | 0.87 |
| Polymer production amount (kg/h) | 7.99 | 6.96 | 7.18 | 7.65 | 7.74 | 7.54 | 7.59 | 8.87 | 9.64 |

The physical properties of the polymers prepared in the above examples and comparative examples were measured as follows, and the results thereof are shown in Table 2.

### (1) Melt flow ratio (MFR)

Melting indices were measured at 190 °C under a load of 21.6 kg and a load of 2.16 kg, respectively, according to ASTM D 1238, and the ratio thereof (MI_{21.6}/MI_{2.16}) was calculated.

### (2) Density

Density was measured according to ASTM D 1505.

### (3) Molecular weight

Gel permeation chromatography-FTIR (GPC-FTIR) of Polymer Char's model number GPC-6 was used. Molecular weight was measured at a temperature of 160 °C, and trichlorobenzene was used as a solvent.

### (4) Thermal characteristics

Thermal characteristics were measured using a differential scanning calorimeter (DSC, device name: DSC 2920, manufacturer: TA instrument). Specifically, polymers were heated to 200°C, maintained at that temperature for 5 minutes, cooled to 20°C again, and then the temperature was increased again. At this time, each of the temperature rising and falling rates was controlled to 20°C/min.

**[Table 2]**

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Combination of transition metal compounds | ABC | ABC | ABC | ABC | ABC | ABC | DB | EBF | GBF |
| Molar ratio of transition metal compounds | 1:0.5:1.8 | 1:1.5:6 | 1:0.3:1.4 | 1:0.5:1.8 | 1:0.005:1.8 | 1:0.5:0.17 | 1:1.5 | 1:0.25:1.25 | 1:0.5:1 |
| *MI | 0.581 | 0.885 | 0.488 | 1.46 | 0.95 | 1.8 | 0.73 | 0.62 | 0.73 |
| *MFI | 36.65 | 39.75 | 34.75 | 102.7 | 32.30 | 90 | 16.34 | 41.90 | 70.80 |
| *MFR | 63.08 | 44.06 | 71.2 | 70.31 | 34.00 | 50 | 22.38 | 67.58 | 96.98 |
| Density (g/cm³) | 0.946 | 0.943 | 0.959 | 0.942 | 0.9560 | 0.94 | 0.9414 | 0.9460 | 0.9456 |
| Mz (g/mol) | 493,000 | 39,7000 | 517,000 | 523,300 | 388,200 | 394,200 | 412,000 | 830,676 | 792,108 |
| Mn (g/mol) | 4000 | 3460 | 3560 | 2300 | 6200 | 5400 | 10100 | 6123 | 6208 |
| Mw (g/mol) | 135,300 | 121,900 | 142,900 | 103,100 | 134,700 | 86,400 | 156,600 | 121,565 | 116,840 |
| PDI | 33.83 | 35.24 | 40.14 | 45.14 | 21.8 | 16.12 | 15.46 | 19.85 | 18.82 |
| Tm (°C) | 127.39 | 136.31 | 118.43 | 123.07 | 133.7 | 122.5 | 127.96 | 127.33 | 126.89 |
| Tc (°C) | 115.21 | 117.21 | 107.61 | 112.7 | 117.5 | 112.8 | 115, | 116.02 | 115.73 |
| Xc (%) | 65.31 | 78.31 | 62.74 | 59.53 | 74 | 58.1 | 85.21 | 68.84 | 68.63 |
| * MI measured at 190°C under load of 2.16 kg | | | | | | | | | |
| * MFI measured at 190°C under load of 21.6 kg | | | | | | | | | |
| *MFR=MFI/MI | | | | | | | | | |

The polyethylene polymers prepared in the examples and comparative examples were extruded as follows to manufacture films, and then the physical properties of the films are listed in Table 3 below.

### (5) Method of manufacturing polyethylene film

The polyethylene polymers of Examples 1 to 4 and Comparative Examples 1 to 5 were extruded at 245°C using a twin-screw extruder of L/D 42DML 25 mm. Die temperature was maintained at 265 °C. T-DIE was adjusted to be a size of 30 to 35 cm and a thickness of 770 to 780 µm to manufacture films.

### (6) Sequential biaxial stretching processing

Biaxial stretching processing was performed using Model name PS002 equipment of SDB Co., Ltd. First, a sample, a sheet of 10 cm x 10 cm x 1 mm, is prepared at 190°C using a press. The prepared sheet is heated in an oven at 120 to 125°C for 300 seconds, stretched in the MD (machine direction) at a speed of 200 %/s, and then stretched in the TD (traverse direction).

### (7) Simultaneous biaxial stretching processing

Biaxial stretching processing was performed using Model KARO 5.0 equipment of Burckner Co., Ltd. A sample of 9 cm x 9 cm is prepared using the polymer. The prepared sample is simultaneously stretched in both machine direction (MD) and traverse direction (TD) at a speed of 200 %/s under heating conditions of 120 to 130°C.

### (8) Haze measurement

Five measurements were performed per sample according to ASTM D 1003, and the average value thereof was described.

### (9) Clarity measurement

Five measurements were performed per sample according to ASTM D 1003, and the average value thereof was described.

**[Table 3]**

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Simultaneous biaxial stretching | | | | | | | | | |
| MD X TD | 7X7 | 7X7 | 7X7 | 7X7 | fail | | | | |
| Thickness (µm) | 13.7 | 5.2 | 8.2 | 13.7 | fail | | | | |
| Haze( %) | 9.3 | 7.4 | 19.4 | 9.3 | fail | | | | |
| Clarity (%) | 95.3 | 98.4 | 76.6 | 95.3 | fail | | | | |
| Impact strength (gf) | 397 | 259 | 432 | 397 | fail | | | | |

| Sequential biaxial stretching | | | | | | | | | |
|---|---|---|---|---|---|---|---|---|---|
| Thickness (µm) | 17.3 | 4.7 | 9.2 | 17.3 | fail | | | | |
| MD X TD | 4X7 | 6X9 | 5X9 | 4X7 | | | | | |
| Haze( %) | 22.2 | 14.8 | 23.8 | 22.2 | fail | | | | |
| Clarity (%) | 87.6 | 73.7 | 91.0 | 95.3 | fail | | | | |
| Impact strength (gf) | 397 | 124 | 365 | 397 | fail | | | | |

Referring to Tables 1 to 3, the hybrid metallocene catalysts of Examples 1 to 4 included the transition metal compounds of Formulas 1 to 3, and thus the polyolefin resins manufactured by polymerizing ethylene and α-olefin had a high density of 0.94 g/cm³ or more, and all of them were capable of biaxial stretching at a high magnification. However, it was confirmed that the high-density polyethylene polymers of Comparative Examples 3 to 5 prepared by using a catalyst other than the specific catalyst mixture of the present disclosure were broken and thus could not be stretched. Comparative Examples 1 and 2 include transition metal compounds of Formulas 1 to 3 of the present disclosure, but when the ratio of Formula 1: Formula 2: Formula 3 is not satisfied, stretching is impossible, resulting in breakage or tearing during stretching, thus making processing impossible. Therefore, it was confirmed that such biaxial stretching characteristics were exhibited when a high-density polyethylene polymer was prepared using the hybrid metallocene catalyst of the present disclosure having a specific ratio. These results are thought to be due to the complex influence of the weight average molecular weight, number average molecular weight, molecular weight distribution, MFR characteristics, thermal characteristics, mechanical properties, crystallinity, etc. of the polymer produced by the hybrid metallocene catalyst of the present disclosure.

Above, although an embodiment has been described in detail through examples and experimental examples, the scope of an embodiment is not limited to a specific example, and should be interpreted in accordance with the appended patent claims.

## Claims

1. A method of preparing high-density polyethylene, the method comprising: polymerizing ethylene and C₄-C₂₀ α-olefin in the presence of a hybrid metallocene catalyst including transition metal compounds of Formulas 1 to 3 below,
wherein the hybrid metallocene catalyst includes the transition metal compounds at a molar ratio of Formula 1: Formula 2: Formula 3 = 1: 0.2 to 3: 1 to 7: 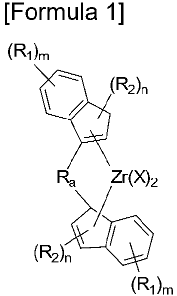 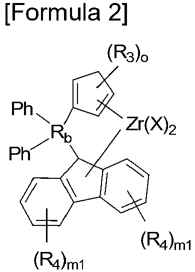 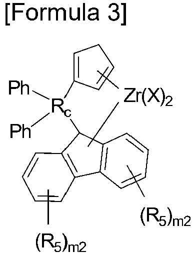
(in Formulas 1 to 3,
Rₐ is C₂-C₆ alkylene, R_{b} and R_{c} are each independently C₁-C₆ alkylene,
R₁, R₂, R₃, R₄, and R₅ are each independently C₁-C₅ alkyl,
X is a halogen, m, m1 and m2 are integers of 0 to 4, n is an integer of 0 to 3, and o is an integer of 1 to 4.)

2. The method of claim 1,
wherein the C₄-C₂₀ α-olefin is a C₅-C₈ α-olefin.

3. The method of claim 1,
wherein Formula 1 is Formula 4 below, Formula 2 is Formula 5 below, and Formula 3 is Formula 6 below:

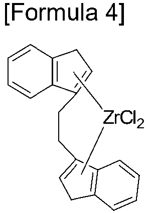

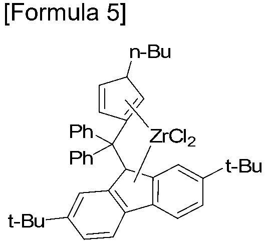

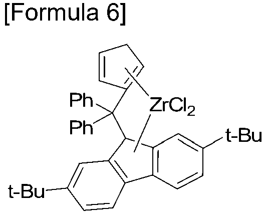

4. The method of claim 1,
wherein a temperature of the polymerization is 60 °C to 90 °C.

5. The method of claim 1,
wherein the hybrid metallocene catalyst is a supported catalyst in which a transition metal compound and a cocatalyst are supported on a carrier.

6. The method of claim 5,
wherein the cocatalyst is at least one selected from the group consisting of compounds represented by Formulas 7 to 9 below: 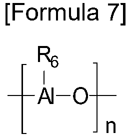 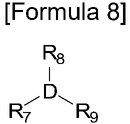
[Formula 9] [L-H]⁺[Z(A)4]- or [L]⁺[Z(A)4]-
(in Formulas 7 to 9,
n is an integer greater than or equal to 2, R₆ is a halogen, a C₁-C₂₀ alkyl group, or a C₁-C₂₀ alkyl group substituted with a halogen,
D is aluminum (Al) or boron (B), R₇, R₈ and R₉ are each independently a halogen, a C₁-C₂₀ straight or branched alkyl group, a C₁-C₂₀ alkyl group substituted with a halogen, or a C₁-C₂₀ alkoxy group,
L is a neutral or cationic Lewis base, [L-H]⁺ and [L]⁺ are Brønsted acids, Z is a Group 13 element, and A is a C₆-C₂₀ aryl group or a C₁-C₂₀ alkyl group.)

7. The method of claim 5,
wherein the carrier is at least one selected from the group consisting of silica, aluminum oxide, and magnesium oxide.

8. A high-density polyethylene resin prepared from ethylene and C₄-C₂₀ α-olefin in the presence of a hybrid catalyst, wherein the high-density polyethylene resin has a density of 0.94 g/cm3 or more, a PDI of 30 or more, and is capable of being stretched 4 times or more in a machine direction (MD) at a speed of 200 %/s at 120 to 130 °C and then sequentially biaxially stretched 4 times or more in a transverse direction (TD), or of being simultaneously biaxially stretched 4x4 times or more in the MD and TD.

9. The high-density polyethylene resin of claim 8,
wherein the hybrid metallocene catalyst includes transition metal compounds of Formulas 1 to 3 below: 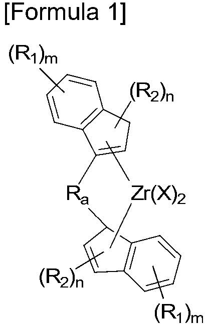 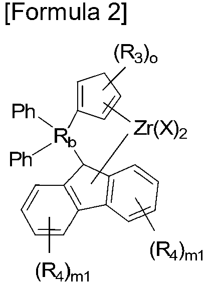 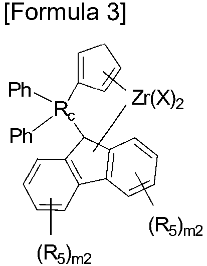
(in Formulas 1 to 3,
Rₐ is C₂-C₆ alkylene, R_{b} and R_{c} are each independently C₁-C₆ alkylene,
R₁, R₂, R₃, R₄, and R₅ are each independently C₁-C₅ alkyl,
X is a halogen, m and m1 are integers of 0 to 4, n is an integer of 0 to 3, and o is an integer of 1 to 4.)

10. The high-density polyethylene resin of claim 9,
wherein the hybrid metallocene catalyst includes the transition metal compounds at a molar ratio of Formula 1: Formula 2: Formula 3 = 1: 0.2 to 3: 1 to 7.

11. The high-density polyethylene resin of claim 8,
wherein the C₄-C₂₀ α-olefin is a C₅-C₈ α-olefin.

12. The high-density polyethylene resin of claim 8,
wherein the high-density polyethylene resin has a melt flow rate (MFR) of 40 or more.

13. The high-density polyethylene resin of claim 8,
wherein the high-density polyethylene resin has a crystallinity (Xc) of 80 or less.

14. A high-density polyethylene film comprising the high-density polyethylene
resin of claim 8.

15. The high-density polyethylene film of claim 14,
wherein the high-density polyethylene film has a haze of 25% or less as measured according to ASTM D1003.

16. The high-density polyethylene film of claim 14,
wherein the high-density polyethylene film has a transparency of 70% or more as measured according to ASTM D1003.

17. The high-density polyethylene film of claim 14,
wherein the high-density polyethylene film has an impact strength of 120 gf or more as measured according to ASTM D1709.

18. A packaging material manufactured using the film of any one of claims 14
to 17.
